# EUROPÄISCHE PATENTSCHRIFT

(11) **EP 2 144 766 B1**
(45) Veröffentlichungstag und Bekanntmachung des Hinweises auf die Patenterteilung: **19.06.2013**
(21) Anmeldenummer: 08708881.1
(22) Anmeldetag: 12.02.2008
(51) Int. Cl.: B60C 11/04, B60C 11/13

(54) **FAHRZEUGLUFTREIFEN**
VEHICLE TYRE
PNEUMATIQUE DE VÉHICULE À MOTEUR

(30) Priorität: 05.04.2007 DE 102007016929
(43) Veröffentlichungstag der Anmeldung: 20.01.2010
(73) Patentinhaber: Continental Reifen Deutschland GmbH, 30165 Hannover (DE)
(72) Erfinder: BUCHINGER-BARNSTORF, Thomas, 30974 Wennigsen (DE)
(74) Vertreter: Finger, Karsten
(86) Internationale Anmeldenummer: PCT/EP2008/051633
(87) Internationale Veröffentlichungsnummer: WO 2008/122455

(56) Entgegenhaltungen:
- JP-A- 2 053 609
- US-A- 4 114 671
- US-A- 5 535 798

## Beschreibung

Die Erfindung begriff einen Fahrzeugluftreifen, insbesondere für Nutzfahrzeuge, mit in Umfangsrichtung verlaufenden breiten Umfangsnuten, welche an der Laufstreifenperipherie jeweils von zwei parallel zueinander und geradlinig verlaufenden Randkanten begrenzt sind und einen in Umfangsrichtung zickzackförmig verlaufenden Nutgrundpfad aufweisen, dessen Breite geringer ist als der gegenseitige Abstand der Randkanten und dessen bezüglich der Randkanten einspringende Ecken jeweils die Spitze einer dreieckigen, zur radialen Richtung geneigten Fläche zugeordnet ist, deren eine Dreiecksseite entlang einer Randkante verläuft, wobei die zur radialen Richtung geneigten dreieckigen Flächen jeweils eine Seitenfläche von pyramidenartigen Erhebungen sind, welche von beiden Nutflanken in die Umfangsnut ragen, wobei an die von den Randkanten aus verlaufenden Flächen zwei weitere Pyramidenflächen anschließen, wobei jeweils zwei dieser Flächen aus benachbarten Erhebungen eine gemeinsame, eine Knicklinie bildende Seite besitzen, welche von der Randkante bis zum Nutgrundpfad verläuft.

Ein Fahrzeugluftreifen mit einem Laufstreifen der eingangs genannten Art ist aus der US 4,114,671 B bekannt. Hier steht es im Vordergrund, die Griffeigenschaften des Reifens zu optimieren, um einen gleichmäßigen Abrieb und trotz zunehmendem Abrieb gute Griffeigenschaften sicherzustellen. Der Nutgrundpfad der Umfangsnuten dieses bekannten Laufstreifens verläuft in einer ausgeprägten Zickzack-Form, deren doppelte Amplitude dem gegenseitigen Abstand der Randkanten der Umfangsnut an der Laufstreifenperipherie entspricht. Die dreieckigen Flächen reichen von der Laufstreifenperipherie nahezu bis zum Nutgrund und sind Flächen von prismatischen Erhebungen. In derart ausgeführten Umfangsnuten können sich Fremdkörper, insbesondere Steine, leicht verklemmen.

Eine Vielzahl von Patentanmeldungen und Patente befasst sich damit, Umfangsnuten in Laufstreifen derart auszuführen, dass sich Fremdkörper, insbesondere kleine Steine, in den Nuten nicht verfangen können. So ist beispielsweise aus der US 3,055,410 bekannt, in zickzackförmigen Umfangsnuten an den einspringenden Ecken Vorsprünge, die bis an den Nutgrund reichen, vorzusehen. Die bekannten Lösungen konnten in der Praxis jedoch nicht überzeugen.

Gemäß der US 5,535,798 soll ein gleichförmiger Abrieb dadurch erreicht werden, dass in Umfangsnuten, welche geradlinig über den Reifenumfang verlaufen, unter einem spitzen Winkel zur radialen Richtung geneigt verlaufende Nutflankenflächen vorgesehen sind, welche mit Vertiefungen versehen werden, die das Negativ dreiseitiger Pyramiden sind, deren Spitzen der Laufstreifenperipherie zugewandt sind.

Der Erfindung liegt die Aufgabe zu Grunde, bei einem Fahrzeugluftreifen der eingangs genannten Art den Laufstreifen bzw. dessen Umfangsnuten derart auszuführen, dass Fremdkörper, insbesondere kleine Steine, verlässlich abgestoßen werden. Gleichzeitig sollen die Profilhaltbarkeit und die Geräuschentwicklung des Profils beim Abrollen günstig beeinflusst werden.

Gelöst wird die gestellte Aufgabe erfindungsgemäß dadurch, dass sich die Spitzen der pyramidenartigen Erhebungen in einem Abstand vom Nutgrund befinden, welcher mindestens 25 % der Profiltiefe beträgt.

Die pyramidenartigen Erhebungen weisen somit auf besondere Weise facettenartig angeordnete Flächen auf, welche für eindringende Fremdkörper, wie kleine Steine, Abrollflächen zur Verfügung stellen, die einen Hinauswurf der Fremdkörper aus der Umfangsnut begünstigen. Da die "Basisflächen" der pyramidenartigen Erhebungen den seitlichen Rillenflanken zugeordnet sind, lässt sich der Nutgrundpfad mit einer geringfügig ausgeprägten Zickzack-Form gestalten. Diese Maßnahme trägt zu einer Erhöhung der Profilhaltbarkeit bei. Die Erhebungen sorgen dafür, dass sich der Querschnitt der Umfangsnut über den Reifenumfang ständig ändert, wodurch das Entstehen von Rillenresonanzen verhindert wird.

Gemäß einer bevorzugten Ausführungsform werden die pyramidenartigen Erhebung derart ausgelegt, dass die Amplitude des zickzackförmigen Nutgrundpfades höchstens 50 % des gegenseitigen Abstandes der Randkanten der Umfangsnut an der Laufstreifenperipherie beträgt. Diese Maßnahmen begünstigen den Auswurf von gegebenenfalls in die Umfangsnut gelangenden Steinen.

Bestimmte konkrete Anordnungen und Ausführungen der Flächen der pyramidenartigen Erhebungen sind besonders vorteilhaft. Insbesondere ist es günstig, wenn die von den Randkanten aus verlaufenden dreieckigen Flächen der Erhebungen mit der radialen Richtung einen Winkel einschließen, welcher zwischen 15 ° und 45° beträgt. Eine weitere, diesbezüglich vorteilhafte Maßnahme besteht darin, dass die weiteren Pyramidenflächen gegenüber der radialen Richtung unter einem Winkel verlaufen, welcher um mindestens 2° kleiner ist als der Neigungswinkel der von der Randkante aus verlaufenden Fläche. Es ist ferner von Vorteil, wenn zwischen jeder weiteren Pyramidenfläche und dem Nutgrundpfad je eine dreieckige Verbindungsfläche vorgesehen ist, wobei jeweils zwei dieser Flächen eine gemeinsame, eine Knicklinie bildende Seite aufweisen.

Eine weitgehend regelmäßige Ausführung und gleichmäßige Anordnung der Erhebungen ist dabei auch für die Quersteifigkeit der Rippen zwischen den Umfangsnuten von Vorteil. Gemäß einem weiteren Merkmal der Erfindung erfolgt daher die gegenseitige Anordnung der Pyramidenflächen und Verbindungsflächen vorzugsweise derart, dass die Knicklinien zwischen ihnen jeweils zueinander parallel verlaufen. Besonders günstig ist es, wenn die von den Randkanten aus verlaufenden Flächen gleichseitige Dreiecke sind. Nachdem an diese Flächen die weiteren Pyramidenflächen und an diese die Verbindungsflächen anschließen, kann über deren jeweils kongruente Ausführung die Gleichmäßigkeit der Erhebungen gewährleistet werden.

Erfindungsgemäß ausgeführte Umfangsnuten können derart gestaltet werden, dass die Erhebungen in Umfangsrichtung relativ lang gestreckt sind. Dabei sind insbesondere Ausführungen möglich, bei welchen die Spitzen der an einer der Nutflanken vorgesehenen Erhebungen einen gegenseitigen Abstand aufweisen, welcher zwischen 15 mm und 80 mm beträgt. Die Breite der Umfangsnuten, welche durch den gegenseitigen Abstand der beiden Randkanten der Umfangsnuten bestimmt ist, kann, je nach Reifentyp und Ausführung ebenfalls variieren. Bevorzugt ist ein gegenseitiger Abstand der beiden Randkanten zwischen 10 mm und 20 mm.

Weitere Merkmale, Vorteile und Einzelheiten der Erfindung werden nun anhand der Zeichnung, die ein Ausführungsbeispiel darstellt, näher beschrieben. Dabei zeigen
Fig. 1 eine Draufsicht auf einen Umfangsabschnitt eines Laufstreifens,
Fig. 2 einen Schnitt entlang der Linie A-A der Fig. 1,
Fig. 3 einen Schnitt entlang der Linie B-B der Fig. 1 und
Fig. 4 eine Schrägansicht eines Details des in Fig. 1 gezeigten Laufstreifens.

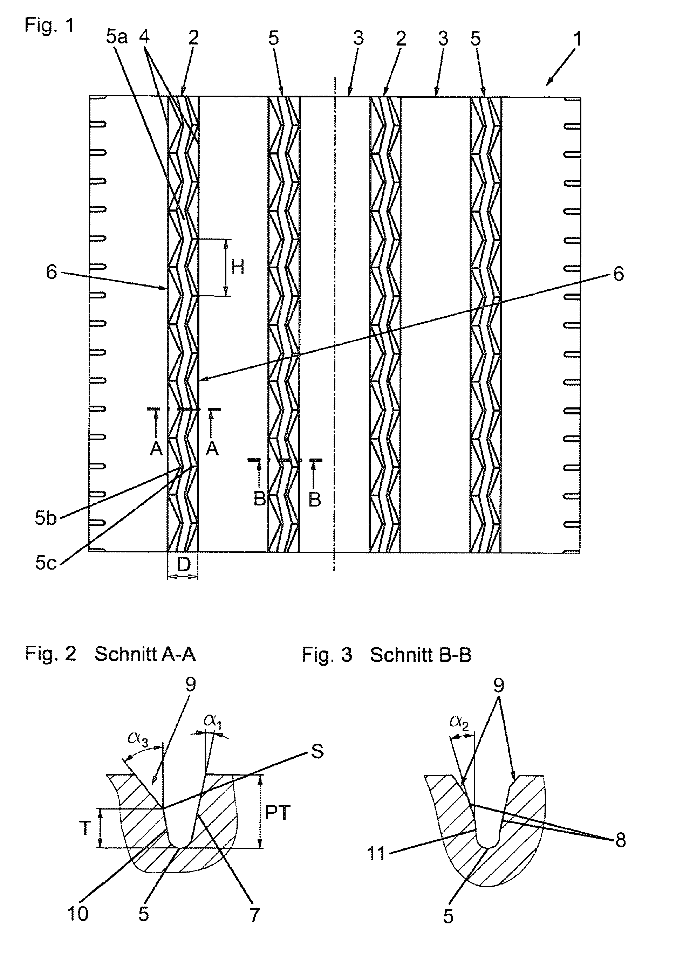

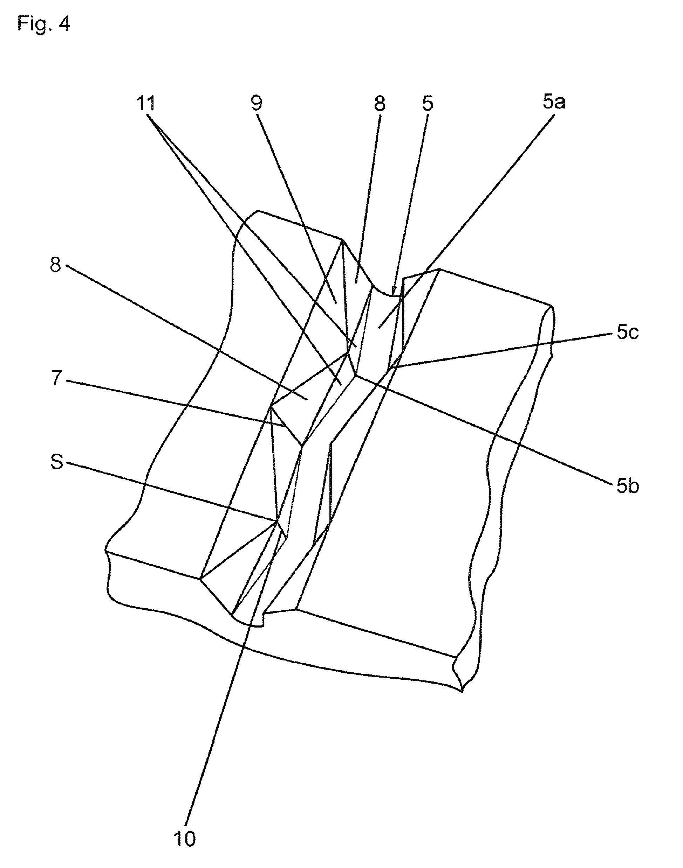

Die Erfindung befasst sich mit einer besonderen Ausgestaltung der Rillenflankenstruktur von Umfangsnuten in Laufstreifen von Nutzfahrzeugreifen. Fig. 1 zeigt beispielhaft einen vier Umfangsnuten 2 und fünf in Umfangsrichtung umlaufende Rippen 3 aufweisenden Laufstreifen 1. Bei der dargestellten Ausführungsvariante sind die Umfangsnuten 2 voneinander gleich beabstandet. Die Umfangsrippen 3 können auf nicht dargestellte Weise mit Einschnitten, Sacknuten und dergleichen strukturiert sein. Die vier dargestellten Umfangsnuten 2 sind übereinstimmend ausgeführt und weisen an der Peripherie des Laufstreifens 1 jeweils in Umfangsrichtung geradlinig umlaufende, voneinander gleich beabstandete Randkanten 4 auf, deren gegenseitiger Abstand D zwischen 10 mm und 20 mm gewählt wird. Entlang des Nutgrundes, welcher sich in der vorgesehenen Profiltiefe PT befindet, die zwischen 8 mm und 30 mm gewählt wird, verläuft in einer gering ausgeprägten Zickzack-Form ein im Querschnitt leicht gerundet ausgeführter Nutgrundpfad 5, dessen Breite zwischen 25 % und 50 % der Nutbreite D beträgt. Die einzelnen, gleich lang ausgeführten Abschnitte 5a des Nutgrundpfades 5 verlaufen unter einem kleinen spitzen Winkel von bis zu 15° zur Umfangsrichtung, sodass die Amplitude des Nutgrundpfades höchstens 50 % des Abstandes D beträgt. Wie es die Zeichnungsfiguren zeigen, steht die Ausbildung des zickzackförmigen Nutgrundpfades 5 in engem Zusammenhang mit der Ausgestaltung der beiden Flanken der Umfangsnuten 2. An jeder Nutflanke ist eine in Umfangrichtung verlaufende Reihe von Erhebungen 6 ausgebildet, welche an den Nutflanken pyramidenartig abragen. Die Spitze S jeder Erhebung 6 ist einem einspringenden Eck 5b des Nutgrundpfades 5 zugeordnet. Hier treffen jeweils fünf dreieckige Flächen, zwei gleichgroße Flächen 8, eine Fläche 9 und zwei weitere, gleichgroße Flächen 11 zusammen, wie es insbesondere in Fig. 4 gezeigt ist. Die Fläche 9 ist die größte Fläche und ein gleichseitiges Dreieck, dessen Hypotenuse mit der betreffenden Randkante 4 zusammenfällt und welches unter einem Winkel α₃ zur radialen Richtung geneigt verläuft, der zwischen 15° und 45° beträgt. An den in Richtung der Randkanten 4 vorspringenden Ecken 5c des zickzackförmigen Nutgrundpfades 5 erstreckt sich vom Nutgrund zu den Randkanten 4 eine Knicklinie 7 unter einem Winkel α₁ von 2° bis 10° zur radialen Richtung. Die Linie 7 ist gleichzeitig eine gemeinsame Seite von zwei dreieckigen Flächen 8, die sich zu den Spitzen S von zwei in Umfangsrichtung benachbarten Erhebungen 6 erstrecken.

Die Knicklinien 7 reichen bis zu den Ecken der Flächen 9 an den Randkanten 4, sodass jeweils zwei der dreieckigen, bei der dargestellten Ausführung kongruenten Flächen 8 an der Spitze S einer Erhebung 6 zusammen treffen. Die Flächen 8 sind, im Schnitt gemäß Fig. 3 betrachtet, gegenüber der radialen Richtung unter einem Winkel α₂ geneigt, welcher um mindestens 2° kleiner als der Winkel α₃ ist und insbesondere zwischen 10° und 35° beträgt. Die Spitze S jeder Erhebung 6 ist einem einspringenden Eck 5b des Nutgrundpfades 5 zugeordnet, wobei sich von der Spitze S eine weitere Knicklinie 10 unter dem Winkel α₁ zum einspringenden Eck 5b des Nutgrundpfades 5 erstreckt. Die Knicklinie 10 ist gleichzeitig eine der Seitenkanten der beiden weiteren bei der dargestellten Variante kongruent ausgeführten, dreieckigen Flächen 11, welche unter dem Winkel α₁ zur radialen Richtung geneigt verlaufen, in Umfangsrichtung lang gestreckt sind und Verbindungsflächen zwischen den Pyramidenflächen 8 und dem Nutgrundpfad 5 sind.

Die beiden Nutflanken der Umfangsnuten 2 sind auf übereinstimmende Weise mit Erhebungen 6 versehen, wobei jeweils eine Knicklinie 7 an der einen Nutflanke einer Knicklinie 10 und einer Spitze S an der anderen Nutflanke gegenüber liegt.

Die Erhebungen 6 werden derart dimensioniert und ausgeführt, dass der Abstand T ihrer Spitzen S von der tiefsten Stelle des Nutgrundpfades 5 zwischen 25 % und 80% der Profiltiefe PT beträgt. Die Wellenlänge der Zickzack-Form des Nutgrundpfades 5 entspricht dem gegenseitigen Abstand H zweier an einer Nutflanke benachbarter Pyramidenspitzen S, welcher zwischen 15 mm und 80 mm beträgt.

Die Flächen 8, 9 der Erhebungen 6 und die Verbindungsflächen 11 zum Nutgrundpfad 5 bilden in Folge ihrer gegenseitigen Anordnung auf optimale Weise Ahrollflächen für in die Nuten 2 gelangende Steine, die sich nur schwer an den facettenartig angeordneten und einander gegenüberliegenden Flächen 8, 9, 11 festklemmen können. Der Nutgrundpfad 5 lässt sich mit einer sehr geringen Amptitude seiner Zickzack-Form ausführen und es besteht die Möglichkeit einer optimalen Ausrundung des Nutgrundpfades. Diese Maßnahmen erhöhen die Haltbarkeit des Profils und vermeiden Einrisse am Nutgrund. Durch die Ausführung der Erhebungen 6 ändert sich der Querschnitt der Umfangsnut 2 in Umfangsrichtung ständig, sodass kaum Rillenresonanzen entstehen können, die in einer Umfangsnut mit gleichförmigem Querschnitt leicht auftreten. Die Erhebungen 6 vermindern ferner den Querschnitt der Umfangsnuten und bewirken daher einen Verzahnungseffekt bei Traktion auf losen Untergründen. Bei fortschreitendem Abrieb des Laufstreifens bilden sich zunehmend immer mehr Querkantenanteile aus, wodurch das Traktionsverhalten des Reifens günstig beeinflusst wird.

Die Erfindung ist auf das dargestellte Ausführungsbeispiel nicht eingeschränkt. So ist es insbesondere möglich, die pyramidenartigen Erhebungen unregelmäßig auszuführen, sodass der Nutgrundpfad unterschiedlich lange oder gewinkelte Abschnitte aufweist.

### Bezugszeichenliste

| | |
|---|---|
| 1 | Laufstreifen |
| 2 | Umfangsnuten |
| 3 | Rippen |
| 4 | Randkanten |
| D | Abstand der Kanten 4 |
| PT | Profiltiefe |
| 5 | zickzackförmiger Nutgrundpfad |
| 5a | Abschnitt |
| 5b | einspringendes Eck |
| 5c | vorspringendes Eck |
| 6 | Erhebung |
| 7 | Knicklinie |
| 8 | Fläche |
| 9 | Fläche |
| 10 | Knicklinie |
| 11 | Flächen |
| α₃ | Neigung der Fläche 9 |
| α₂ | Neigung der Fläche 8 |
| α₁ | Neigung Knicklinie 7 |
| T | Abstand der Spitze S |

## Patentansprüche

1. Fahrzeugluftreifen, insbesondere für Nutzfahrzeuge, mit in Umfangsrichtung verlaufenden breiten Umfangsnuten (2), welche an der Laufstreifenperipherie jeweils von zwei parallel zueinander und geradlinig verlaufenden Randkanten (4) begrenzt sind und einen in Umfangsrichtung zickzackförmig verlaufenden Nutgrundpfad (5) aufweisen, dessen Breite geringer ist als der gegenseitige Abstand (D) der Randkanten (4) und dessen bezüglich der Randkanten (4) einspringende Ecken (5b) jeweils die Spitze (S) einer dreieckigen, zur radialen Richtung geneigten Fläche (9) zugeordnet ist, deren eine Dreiecksseite entlang einer Randkante (4) verläuft, wobei die zur radialen Richtung geneigten dreieckigen Flächen (9) jeweils eine Seitenfläche von pyramidenartigen Erhebungen (6) sind, welche von beiden Nutflanken in die Umfangsnut (2) ragen, wobei an die von den Randkanten (4) aus verlaufenden Flächen (9) zwei weitere Pyramidenflächen (8) anschließen, wobei jeweils zwei dieser Flächen (8) aus benachbarten Erhebungen (6) eine gemeinsame, eine Knicklinie (7) bildende Seite besitzen, welche von der Randkante (4) bis zum Nutgrundpfad (5) verläuft,
**dadurch gekennzeichnet,**
**dass** sich die Spitzen (S) der pyramidenartigen Erhebungen in einem Abstand (T) vom Nutgrund befinden, welcher mindestens 25 % der Profiltiefe (PT) beträgt.

2. Fahrzeugluftreifen nach Anspruch 1, **dadurch gekennzeichnet, dass** die Amplitude des zickzackförmigen Nutgrundpfades (5) höchstens 50 % des gegenseitigen Abstandes (D) der Randkanten (4) der Umfangsnut (2) an der Laufstreifenperipherie beträgt.

3. Fahrzeugluftreifen nach Anspruch 1 oder 2, **dadurch gekennzeichnet, dass** die von den Randkanten (4) aus verlaufenden dreieckigen Flächen (9) der Erhebungen (6) mit der radialen Richtung einen Winkel (α₃) einschließen, welcher zwischen 15° und 45° beträgt.

4. Fahrzeugluftreifen nach einem der Ansprüche 1 bis 3, **dadurch gekennzeichnet, dass** die weiteren Pyramidenflächen (8) gegenüber der radialen Richtung unter einem Winkel (α₂) verlaufen, welcher um mindestens 2° kleiner ist als der Neigungswinkel (α₃) der von der Randkante (4) aus verlaufenden Fläche (9).

5. Fahrzeugluftreifen nach einem der Ansprüche 1 bis 4, **dadurch gekennzeichnet, dass** zwischen jeder weiteren Pyramidenfläche (8) und dem Nutgrundpfad (5) je eine dreieckige Verbindungsfläche (11) vorgesehen ist, wobei jeweils zwei dieser Flächen (11) eine gemeinsame, eine Knicklinie (10) bildende Seite aufweisen.

6. Fahrzeugluftreifen nach Anspruch 1 oder 5,**dadurch gekennzeichnet, dass** die Knicklinien (7, 10) zwischen den Pyramidenflächen (8) und den Verbindungsflächen (11) zueinander parallel verlaufen.

7. Fahrzeugluftreifen nach Anspruch 1, 5 oder 6, **dadurch gekennzeichnet, dass** die Knicklinien (7, 10) mit der radialen Richtung einen Winkel (α₁) einschließen, welcher zwischen 2° und 10° beträgt.

8. Fahrzeugluftreifen nach einem der Ansprüche 1 bis 7, **dadurch gekennzeichnet, dass** die von den Randkanten (4) aus verlaufenden Flächen (9) gleichseitige Dreiecke sind.

9. Fahrzeugluftreifen nach einem der Ansprüche 1 bis 8, **dadurch gekennzeichnet, dass** der gegenseitige Abstand von in Umfangsrichtung benachbarten Spitzen (S) der Erhebungen (6) zwischen 15 mm und 80 mm beträgt.

10. Fahrzeugluftreifen nach einem der Ansprüche 1 bis 9, **dadurch gekennzeichnet, dass** der gegenseitige Abstand (D) der beiden Randkanten (4) der Umfangsnut (2) zwischen 10 mm und 20 mm beträgt.

## Claims

1. Pneumatic vehicle tyre, in particular for commercial vehicles, with wide circumferential grooves (2) running in the circumferential direction, which are respectively bounded at the periphery of the tread rubber by two peripheral edges (4) running parallel to each other and in a straight line, and have a groove root path (5) running in a zigzag form in the circumferential direction, the width of which path is less than the mutual spacing (D) between the peripheral edges (4) and the corners (5b) of which, projecting inward with respect to the peripheral edges (4), are respectively assigned the tip (S) of a triangular area (9) which is inclined in relation to the radial direction and the one side of the triangle of which runs along a peripheral edge (4), the triangular areas (9) that are inclined in relation to the radial direction being in each case a side face of pyramidal elevations (6), which protrude from both groove flanks into the circumferential groove (2), two further pyramid faces (8) adjoining the areas (9) running from the peripheral edges (4), two of these faces (8) from adjacent elevations (6) respectively having a common side, which runs from the peripheral edge (4) to the groove root path (5) and forms a line of inflection (7), **characterized in that** the tips (S) of the pyramidal elevations are located at a distance (T) from the groove root that is at least 25% of the profile depth (PT).

2. Pneumatic vehicle tyre according to Claim 1, **characterized in that** the amplitude of the zigzagging groove root path (5) is at most 50% of the mutual spacing (D) between the peripheral edges (4) of the circumferential groove (2) at the periphery of the tread rubber.

3. Pneumatic vehicle tyre according to Claim 1 or 2, **characterized in that** the triangular areas (9) of the elevations (6) running from the peripheral edges (4) form an included angle (α₃) with the radial direction that is between 15° and 45°.

4. Pneumatic vehicle tyre according to one of Claims 1 to 3, **characterized in that** the further pyramid faces (8) run at an angle (α₂) to the radial direction that is smaller by at least 2° than the angle of inclination (α₃) of the area (9) running from the peripheral edge (4).

5. Pneumatic vehicle tyre according to one of Claims 1 to 4, **characterized in that** a triangular connecting area (11) is respectively provided between every further pyramid face (8) and the groove root path (5), two of these areas (11) respectively having a common side, forming a line of inflection (10).

6. Pneumatic vehicle tyre according to Claim 1 or 5, **characterized in that** the lines of inflection (7, 10) between the pyramid faces (8) and the connecting areas (11) run parallel to one another.

7. Pneumatic vehicle tyre according to Claim 1, 5 or 6, **characterized in that** the lines of inflection (7, 10) form an included angle (α₁) with the radial direction that is between 2° and 10°.

8. Pneumatic vehicle tyre according to one of Claims 1 to 7, **characterized in that** the areas (9) running from the peripheral edges (4) are equilateral triangles.

9. Pneumatic vehicle tyre according to one of Claims 1 to 8, **characterized in that** the mutual spacing between circumferentially adjacent tips (S) of the elevations (6) is between 15 mm and 80 mm.

10. Pneumatic vehicle tyre according to one of Claims 1 to 9, **characterized in that** the mutual spacing (D) between the two peripheral edges (4) of the circumferential groove (2) is between 10 mm and 20 mm.

## Revendications

1. Bandage pneumatique de véhicule, en particulier pour véhicules utilitaires, comprenant des rainures périphériques larges (2) s'étendant dans la direction périphérique, qui sont limitées au niveau de la périphérie de la bande de roulement à chaque fois par deux arêtes de bord (4) parallèles l'une à l'autre et s'étendant en ligne droite, et qui présentent un chemin de base de rainure (5) s'étendant en zigzag dans la direction périphérique, dont la largeur est inférieure à la distance mutuelle (D) des arêtes de bord (4) et au coin duquel (5b), rentrant par rapport aux arêtes de bord (4), est à chaque fois associée la pointe (S) d'une surface triangulaire (9) inclinée par rapport à la direction radiale, dont un côté du triangle s'étend le long d'une arête de bord (4), les surfaces triangulaires (9) inclinées par rapport à la direction radiale constituant à chaque fois une surface latérale de rehaussements (6) de type pyramide, qui font saillie dans la rainure périphérique (2) depuis les deux flancs de rainure, deux autres surfaces de pyramide (8) se raccordant aux surfaces (9) s'étendant depuis les arêtes de bord (4), à chaque fois deux de ces surfaces (8) provenant de rehaussements (6) adjacents possédant un côté commun formant une ligne de flexion (7) qui s'étend depuis l'arête de bord (4) jusqu'au chemin de fond de rainure (5),
**caractérisé en ce que**
les pointes (S) des rehaussements de type pyramide se trouvent à une distance (T) du fond de rainure qui vaut au moins 25 % de la profondeur du profil (PT).

2. Bandage pneumatique de véhicule selon la revendication 1, **caractérisé en ce que** l'amplitude du chemin de fond de rainure en forme de zigzag (5) vaut au maximum 50 % de la distance mutuelle (D) des arêtes de bord (4) de la rainure périphérique (2) au niveau de la périphérie de la bande de roulement.

3. Bandage pneumatique de véhicule selon la revendication 1 ou 2, **caractérisé en ce que** les surfaces (9) triangulaires s'étendant à partir des arêtes de bord (4) des rehaussements (6) forment avec la direction radiale un angle (α₃) qui est compris entre 15° et 45°.

4. Bandage pneumatique de véhicule selon l'une quelconque des revendications 1 à 3, **caractérisé en ce que** les autres surfaces de pyramide (8) s'étendent par rapport à la direction radiale suivant un angle (α₂), qui est inférieur d'au moins 2° à l'angle d'inclinaison (α₃) de la surface (9) s'étendant à partir de l'arête de bord (4).

5. Bandage pneumatique de véhicule selon l'une quelconque des revendications 1 à 4, **caractérisé en ce qu'**entre chaque autre surface de pyramide (8) et le chemin de base de rainure (5) est prévue à chaque fois une surface de liaison triangulaire (11), à chaque fois deux de ces surfaces (11) présentant un côté commun formant une ligne de flexion (10).

6. Bandage pneumatique de véhicule selon la revendication 1 ou 5, **caractérisé en ce que** les lignes de flexion (7, 10) s'étendent parallèlement l'une à l'autre entre les surfaces de pyramide (8) et les surfaces de liaison (11).

7. Bandage pneumatique de véhicule selon la revendication 1, 5 ou 6, **caractérisé en ce que** les lignes de flexion (7, 10) forment avec la direction radiale un angle (α₁) qui est compris entre 2° et 10°.

8. Bandage pneumatique de véhicule selon l'une quelconque des revendications 1 à 7, **caractérisé en ce que** les surfaces (9) s'étendant à partir des arrêtes de bord (4) sont des triangles équilatéraux.

9. Bandage pneumatique selon l'une quelconque des revendications 1 à 8, **caractérisé en ce que** la distance mutuelle des pointes (S) des rehaussements (6) adjacentes dans la direction périphérique est comprise entre 15 mm et 80 mm.

10. Bandage pneumatique selon l'une quelconque des revendications 1 à 9, **caractérisé en ce que** la distance mutuelle (D) des deux arêtes de bord (4) de la rainure périphérique (2) est comprise entre 10 mm et 20 mm.
